# EUROPEAN PATENT APPLICATION

(11) **EP 4 734 416 A1**
(43) Date of publication of application: **29.04.2026**
(21) Application number: 23941979.9
(22) Date of filing: 21.06.2023
(51) Int. Cl.: H04L 1/16, H04W 72/232

(54) **PROCESSING METHOD, AND APPARATUS, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/101977
(87) International publication number: WO 2024/259708

(57) **Abstract**

Provided in the present disclosure are a processing method, and an apparatus, a device and a storage medium. The method comprises: a first device determining a first width and a second width, wherein the first width is a bitwidth required by a first indication field of first signaling in a first transmission scheme, the second width is a bitwidth required by the first indication field in a second transmission scheme, and the first indication field is used for indicating an association relationship between different ports; and the first width being different from the second width, and the first device executing a first operation, so as to determine the first signaling sent in the first transmission scheme and/or the first signaling sent in the second transmission scheme, wherein the first operation is used for making the bitwidth of the first signaling sent in the first transmission scheme be the same as the bitwidth of the first signaling sent in the second transmission scheme. The present disclosure can guarantee the stability of signaling transmission.

## Description

### FIELD

The present disclosure relates to the field of communication technologies, and in particular, to a processing method and apparatus, a communication device, a communication system, and a storage medium.

### BACKGROUND

In communication systems, a terminal typically switches between different transmission schemes, for example, the terminal often dynamically switches between single transmission reception point (STRP) transmission and multi transmission reception point (MTRP) transmission. In STRP transmission, the bitwidth of an indication field in Downlink Control Information (DCI) signaling used to indicate an association relationship between ports is different from the bitwidth of the indication field in DCI signaling used to indicate the association relationship between ports in MTRP transmission. This results in the bitwidth of DCI in STRP transmission being different from that in MTRP transmission, introducing uncertainty to the DCI size. Consequently, this affects the stability and efficiency of the terminal in decoding DCI in scenarios involving dynamic switching of transmission schemes.

### SUMMARY

The present disclosure proposes a processing method and apparatus, a communication device, a communication system, and a storage medium.

According to a first aspect of embodiments of the present disclosure, a processing method is provided, including:
determining, by a first device, a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports; and
in a case where the first width is different from the second width, performing, by the first device, a first operation to determine the first signaling to be sent in the first transmission scheme and/or the first signaling to be sent in the second transmission scheme, where the first operation is used to make a bit width of the first signaling to be sent in the first transmission scheme the same as a bit width of the first signaling to be sent in the second transmission scheme.

According to a second aspect of embodiments of the present disclosure, a processing method is provided, including:
determining, by a second device, a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports; and
in a case where the first width is different from the second width, determining, by the second device based on the first width and the second width, a seventh width of the first signaling sent by a first device in the first transmission scheme and the second transmission scheme.

According to a third aspect of embodiments of the present disclosure, a processing method is provided, including:
determining, by a first device, a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports;
in a case where the first width is different from the second width, performing, by the first device, a first operation to determine the first signaling to be sent in the first transmission scheme and/or the first signaling to be sent in the second transmission scheme, where the first operation is used to make a bit width of the first signaling to be sent in the first transmission scheme the same as a bit width of the first signaling to be sent in the second transmission scheme;
determining, by a second device, a seventh width, where the seventh width is a bit width of the first signaling sent by the first device in the first transmission scheme and the second transmission scheme, and the seventh width is determined based on the first width and the second width; and
demodulating the first signaling received in the first transmission scheme based on the seventh width, and/or demodulating the first signaling received in the second transmission scheme.

According to a fourth aspect of embodiments of the present disclosure, a first communication apparatus is provided, including:
a processing module, configured to determine a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports;
where the processing module is further configured to: in a case where the first width is different from the second width, perform a first operation to determine the first signaling to be sent in the first transmission scheme and/or the first signaling to be sent in the second transmission scheme, where the first operation is used to make a bit width of the first signaling to be sent in the first transmission scheme the same as a bit width of the first signaling to be sent in the second transmission scheme.

According to a fifth aspect of embodiments of the present disclosure, a second communication apparatus is provided, including:
a processing module, configured to determine, when a first device sends a first signaling in a first transmission scheme and a second transmission scheme respectively, a first width required for a first indication field of the first signaling in the first transmission scheme, and a second width required for the first indication field in the second transmission scheme, where the first indication field is used to indicate an association relationship between different ports;
where the processing module is further configured to: in a case where the first width is different from the second width, determine, based on the first width and the second width, a fifth width of the first signaling sent by the first device in the first transmission scheme and the second transmission scheme.

According to a sixth aspect of embodiments of the present disclosure, a communication device is provided, including:
one or more processors;
where the one or more processors are configured to invoke instructions to cause the communication device to perform the processing method according to any one of the first aspect, the second aspect, and the third aspect.

According to a seventh aspect of embodiments of the present disclosure, a communication system is provided, characterized by including a terminal and a network device, where the terminal is configured to implement the processing method according to the first aspect, and the network device is configured to implement the processing method according to the second aspect.

According to an eighth aspect of embodiments of the present disclosure, a storage medium is provided, where the storage medium stores instructions, characterized in that, when the instructions are run on a communication device, the communication device is caused to perform the processing method according to any one of the first aspect, the second aspect, and the third aspect.

### BRIEF DESCRIPTION OF THE DRAWINGS

The above and/or additional aspects and advantages of the present disclosure will become apparent and easily understood from the following description of embodiments in conjunction with the accompanying drawings, where:
FIG. 1 is a schematic architectural diagram of some communication systems according to embodiments of the present disclosure;
FIG. 2A is an interaction diagram of a processing method provided by an embodiment of the present disclosure;
FIGS. 3A-3B are flow diagrams of a processing method provided by another embodiment of the present disclosure;
FIGS. 4A-4B are flow diagrams of a processing method provided by yet another embodiment of the present disclosure;
FIG. 5 is a flow diagram of a processing method provided by yet another embodiment of the present disclosure;
FIG. 6A is a structural diagram of a first communication apparatus provided by an embodiment of the present disclosure;
FIG. 6B is a structural diagram of a first communication apparatus provided by an embodiment of the present disclosure;
FIG. 7A is a structural diagram of a communication device provided by an embodiment of the present disclosure; and
FIG. 7B is a structural diagram of a chip provided by an embodiment of the present disclosure.

### DETAILED DESCRIPTION

Embodiments of the present disclosure provides a processing method and apparatus, a communication device, a communication system, and a storage medium.

In a first aspect, an embodiment of the present disclosure provides a processing method, and the method includes:
determining, by a first device, a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports; and
in a case where the first width is different from the second width, performing, by the first device, a first operation to determine the first signaling to be sent in the first transmission scheme and/or the first signaling to be sent in the second transmission scheme, where the first operation is used to make a bit width of the first signaling to be sent in the first transmission scheme the same as a bit width of the first signaling to be sent in the second transmission scheme.

In the above embodiment, when the first device determines that the first width required for the first indication field of the first signaling in the first transmission scheme is different from the second width required for the first indication field in the second transmission scheme, the first device performs the first operation, so that the width of the first signaling to be sent in the first transmission scheme is the same as the width of the first signaling to be sent in the second transmission scheme. It can thus be understood that in the embodiments of the present disclosure, the actual width of the first signaling sent by the first device in the first transmission scheme is made the same as the actual width of the first signaling sent in the second transmission scheme, thereby ensuring that the width of the first signaling sent under different transmission schemes remains consistent. Therefore, even if the transmission scheme is switched, since the width of the first signaling sent under different transmission schemes remains consistent, the receiving device of the first signaling (i.e., the subsequent second device) does not need to determine which transmission scheme is currently in use after receiving the first signaling. Instead, it can first traverse the widths required for the first indication field of the first signaling in each transmission scheme, then use the same determination method as the first device to determine the same width of the first signaling actually sent under different transmission schemes. Subsequently, the second device demodulates the first signaling based on the determined same width of the first signaling actually sent under different transmission schemes, thereby avoiding blind detection of the first signaling by the second device, ensuring stability and efficiency in decoding the first signaling, and further ensuring the stability and efficiency of signaling transmission.

In combination with some embodiments of the first aspect, in some embodiments, the first signaling includes downlink control information (DCI) signaling;
the first indication field is used to indicate an association relationship between a demodulation reference signal (DMRS) port and a phase tracking reference signal (PTRS) port;
the first transmission scheme includes: single transmission reception point (STRP) transmission in simultaneous transmission across multiple panels (STxMP) transmission; and
the second transmission scheme includes: space division multiplexing (SDM) transmission or single frequency network (SFN) transmission of multi transmission reception point (MTRP) in STxMP transmission.

In the above embodiment, by limiting the first transmission scheme to STRP transmission in STxMP transmission, and the second transmission scheme to SDM transmission or SFN transmission of MTRP in STxMP transmission, and limiting the first signaling to DCI signaling, the first device makes the width of the first signaling actually sent in STRP transmission the same as the width of the DCI signaling actually sent in SDM transmission or SFN transmission of MTRP. This ensures that the width of the DCI signaling sent under STRP transmission and SDM transmission or SFN transmission of MTRP remains consistent. Consequently, even with dynamic switching between STRP transmission and SDM transmission or SFN transmission of MTRP, since the width of the DCI signaling sent under these schemes remains consistent, the stability and efficiency of the receiving device of the first signaling in decoding the first signaling can be ensured, thereby ensuring the stability and efficiency of signaling transmission.

In combination with some embodiments of the first aspect, in some embodiments, the case where the first width is different from the second width includes:
the first indication field exists in the first signaling of both the first transmission scheme and the second transmission scheme, and the first width is different from the second width.

In combination with some embodiments of the first aspect, in some embodiments, before performing the first operation, the method further includes at least one of:
determining to perform an initial access;
determining to perform a cell reselection;
determining to perform a cell handover; or
determining to perform a bandwidth part (BWP) switching.

In combination with some embodiments of the first aspect, in some embodiments, performing the first operation includes:
determining a first target value, where the first target value is a maximum of the first width and the second width, or the first target value is a value greater than the first width or the second width; and
performing a zero-padding operation on the first indication field, so that both a third width and a fourth width are the first target value, where the third width is a bit width of the first indication field subjected to the zero-padding operation of the first signaling to be sent in the first transmission scheme, and the fourth width is a bit width of the first indication field subjected to the zero-padding operation of the first signaling to be sent in the second transmission scheme.

In combination with some embodiments of the first aspect, in some embodiments, the case where the first width is different from the second width includes:
one of the first signaling in the first transmission scheme and the first signaling in the second transmission scheme does not include the first indication field.

In combination with some embodiments of the first aspect, in some embodiments, performing the first operation includes:
determining a fifth width and a sixth width, where the fifth width is a bit width of the first signaling in a case where the first indication field has the first width, and the sixth width is a bit width of the first signaling in a case where the first indication field has the second width;
determining a second target value, where the second target value is a maximum of the fifth width and the sixth width, or the second target value is a value greater than the fifth width or the sixth width; and
performing a zero-padding operation on the first signaling, so that both a seventh width and an eighth width are the second target value, where the seventh width is a bit width of the first signaling subjected to the zero-padding operation and to be sent in the first transmission scheme, and the eighth width is a bit width of the first signaling subjected to the zero-padding operation and to be sent in the second transmission scheme.

In the above embodiment, by providing a method for the first device to perform the first operation, the first device can successfully perform the first operation, thereby making the width of the first signaling to be sent in the first transmission scheme the same as the width of the first signaling to be sent in the second transmission scheme, thus ensuring the stability and efficiency of the receiving device of the first signaling in decoding the first signaling, and further ensuring the stability and efficiency of signaling transmission.

In combination with some embodiments of the first aspect, in some embodiments, determining the first width includes:
determining the first width based on a first parameter, where the first parameter is used to configure a transmission manner of signals in the first transmission scheme; and
determining the second width includes:
determining the second width based on a second parameter, where the second parameter is used to configure a transmission manner of signals in the second transmission scheme.

In combination with some embodiments of the first aspect, in some embodiments, the first parameter includes at least one of: a maximum layer number corresponding to the first transmission scheme, a codebook subset corresponding to the first transmission scheme, a transmit precoding matrix indicator (TPMI) corresponding to the first transmission scheme, a transmit rank indicator (TRI) corresponding to the first transmission scheme, or a maximum port number of PTRS corresponding to the first transmission scheme;
the second parameter includes at least one of: a maximum layer number corresponding to the second transmission scheme, a codebook subset corresponding to the second transmission scheme, a TPMI corresponding to the second transmission scheme, a TRI corresponding to the second transmission scheme, or a maximum port number of PTRS corresponding to the second transmission scheme.

In the above embodiment, by providing a method for the first device to determine the first width and the second width, when the first width and the second width are different, the first device can perform the first operation to make the width of the first signaling to be sent in the first transmission scheme the same as the width of the first signaling to be sent in the second transmission scheme, thereby ensuring the stability and efficiency of the receiving device of the first signaling in decoding the first signaling, and further ensuring the stability and efficiency of signaling transmission.

In combination with some embodiments of the first aspect, in some embodiments, after performing the first operation, the method further includes:
sending the first signaling in the first transmission scheme, and/or sending the first signaling in the second transmission scheme.

In the above embodiment, the first device sends the first signaling to be sent in the first transmission scheme and/or the first signaling to be sent in the second transmission scheme, after performing the first operation, to the second device, thereby ensuring that the widths of the first signaling received by the second device in different transmission schemes are the same. This ensures the stability and efficiency of the second device in decoding the first signaling in scenarios of transmission scheme switching, thereby ensuring the stability and efficiency of signaling transmission.

In combination with some embodiments of the first aspect, in some embodiments, the DCI signaling includes at least one of:
DCI format 0_1; or
DCI format 0_2.

In a second aspect, an embodiment of the present disclosure proposes a processing method, including:
determining, by a second device, a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports; and
in a case where the first width is different from the second width, determining, by the second device based on the first width and the second width, a seventh width of the first signaling sent by a first device in the first transmission scheme and the second transmission scheme.

In the above embodiment, when the first width required for the first indication field of the first signaling in the first transmission scheme is different from the second width required for the first indication field in the second transmission scheme, the second device determines, based on the first width and the second width, the seventh width of the first signaling sent by the first device in the first transmission scheme and the second transmission scheme. It can thus be understood that when the required widths of the first indication field of the first signaling under different transmission schemes are different, the second device does not need to determine which transmission scheme is currently in use. Instead, it traverses the widths required for the first indication field of the first signaling in each transmission scheme, then uses the same determination method as the first device to determine the same width of the first signaling actually sent under different transmission schemes. Subsequently, the second device demodulates the first signaling based on the determined same width of the first signaling actually sent under different transmission schemes, thereby avoiding blind detection of the first signaling by the second device, ensuring stability and efficiency in decoding the first signaling, and further ensuring the stability and efficiency of signaling transmission.

In combination with some embodiments of the second aspect, in some embodiments, the first signaling includes DCI signaling;
the first indication field is used to indicate an association relationship between DMRS ports and PTRS ports;
the first transmission scheme includes: STRP transmission in STxMP transmission; and
the second transmission scheme includes: SDM transmission or SFN transmission of MTRP in STxMP transmission.

In combination with some embodiments of the second aspect, in some embodiments, determining, by the second device based on the first width and the second width, the seventh width of the first signaling sent by the first device in the first transmission scheme and the second transmission scheme includes:
determining a first target value, where the first target value is a maximum of the first width and the second width, or the first target value is a value greater than the first width or the second width; and
determining a sum of the first target value and a bit width of indication fields other than the first indication field in the first signaling as the seventh width.

In combination with some embodiments of the second aspect, in some embodiments, determining, by the second device based on the first width and the second width, the seventh width of the first signaling sent by the first device in the first transmission scheme and the second transmission scheme includes:
determining a fifth width and a sixth width, where the fifth width is a bit width of the first signaling in a case where the first indication field has the first width, and the sixth width is a bit width of the first signaling in a case where the first indication field has the second width;
determining a second target value, where the second target value is a maximum of the fifth width and the sixth width, or the second target value is a value greater than the fifth width or the sixth width; and
determining the second target value as the seventh width.

In combination with some embodiments of the second aspect, in some embodiments, determining the first width includes:
determining the first width based on a first parameter, where the first parameter is used to configure a transmission manner of signals in the first transmission scheme; and
determining the second width includes:
   determining the second width based on a second parameter, where the second parameter is used to configure a transmission manner of signals in the second transmission scheme.

In combination with some embodiments of the second aspect, in some embodiments, the first parameter includes at least one of: a maximum layer number corresponding to the first transmission scheme, a codebook subset corresponding to the first transmission scheme, a TPMI corresponding to the first transmission scheme, a TRI corresponding to the first transmission scheme, or a maximum port number of PTRS corresponding to the first transmission scheme;
the second parameter includes at least one of: a maximum layer number corresponding to the second transmission scheme, a codebook subset corresponding to the second transmission scheme, a TPMI corresponding to the second transmission scheme, a TRI corresponding to the second transmission scheme, or a maximum port number of PTRS corresponding to the second transmission scheme.

In combination with some embodiments of the second aspect, in some embodiments, the method further includes:
demodulating the first signaling received in the first transmission scheme based on the seventh width, and/or demodulating the first signaling received in the second transmission scheme.

In combination with some embodiments of the second aspect, in some embodiments, the DCI signaling includes at least one of:
DCI format 0_1; or
DCI format 0_2.

In a third aspect, an embodiment of the present disclosure proposes a processing method for a communication system, the communication system including a first device and a second device, the method including at least one of:
determining, by a first device, a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports;
in a case where the first width is different from the second width, performing, by the first device, a first operation to determine the first signaling to be sent in the first transmission scheme and/or the first signaling to be sent in the second transmission scheme, where the first operation is used to make a bit width of the first signaling to be sent in the first transmission scheme the same as a bit width of the first signaling to be sent in the second transmission scheme;
determining, by a second device, a seventh width, where the seventh width is a bit width of the first signaling sent by the first device in the first transmission scheme and the second transmission scheme, and the seventh width is determined based on the first width and the second width; and
demodulating the first signaling received in the first transmission scheme based on the seventh width, and/or demodulating the first signaling received in the second transmission scheme.

In a fourth aspect, an embodiment of the present disclosure proposes a first communication apparatus, including:
a processing module, configured to determine a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports;
where the processing module is further configured to: in a case where the first width is different from the second width, perform a first operation to determine the first signaling to be sent in the first transmission scheme and/or the first signaling to be sent in the second transmission scheme, where the first operation is used to make a bit width of the first signaling to be sent in the first transmission scheme the same as a bit width of the first signaling to be sent in the second transmission scheme.

In combination with some embodiments of the fourth aspect, in some embodiments, the first signaling includes downlink control information (DCI) signaling;
the first indication field is used to indicate an association relationship between a demodulation reference signal (DMRS) port and a phase tracking reference signal (PTRS) port;
the first transmission scheme includes: single transmission reception point (STRP) transmission in simultaneous transmission across multiple panels (STxMP) transmission; and
the second transmission scheme includes: space division multiplexing (SDM) transmission or single frequency network (SFN) transmission of a multi transmission reception point (MTRP) in STxMP transmission.

In combination with some embodiments of the fourth aspect, in some embodiments, before performing the first operation, the method further includes at least one of:
determining to perform an initial access;
determining to perform a cell reselection;
determining to perform a cell handover; or
determining to perform a bandwidth part (BWP) switching.

In combination with some embodiments of the fourth aspect, in some embodiments, performing the first operation includes:
determining a first target value, where the first target value is a maximum of the first width and the second width, or the first target value is a value greater than the first width or the second width; and
performing a zero-padding operation on the first indication field, so that both a third width and a fourth width are the first target value, where the third width is a bit width of the first indication field subjected to the zero-padding operation of the first signaling to be sent in the first transmission scheme, and the fourth width is a bit width of the first indication field subjected to the zero-padding operation of the first signaling to be sent in the second transmission scheme.

In combination with some embodiments of the fourth aspect, in some embodiments, performing the first operation includes:
determining a fifth width and a sixth width, where the fifth width is a bit width of the first signaling in a case where the first indication field has the first width, and the sixth width is a bit width of the first signaling in a case where the first indication field has the second width;
determining a second target value, where the second target value is a maximum of the fifth width and the sixth width, or the second target value is a value greater than the fifth width or the sixth width; and
performing a zero-padding operation on the first signaling, so that both a seventh width and an eighth width are the second target value, where the seventh width is a bit width of the first signaling subjected to the zero-padding operation and to be sent in the first transmission scheme, and the eighth width is a bit width of the first signaling subjected to the zero-padding operation and to be sent in the second transmission scheme.

In combination with some embodiments of the fourth aspect, in some embodiments, determining the first width includes:
determining the first width based on a first parameter, where the first parameter is used to configure a transmission manner of signals in the first transmission scheme; and
determining the second width includes:
determining the second width based on a second parameter, where the second parameter is used to configure a transmission manner of signals in the second transmission scheme.

In combination with some embodiments of the fourth aspect, in some embodiments, the first parameter includes at least one of: a maximum layer number corresponding to the first transmission scheme, a codebook subset corresponding to the first transmission scheme, a transmit precoding matrix indicator (TPMI) corresponding to the first transmission scheme, a transmit rank indicator (TRI) corresponding to the first transmission scheme, or a maximum port number of PTRS corresponding to the first transmission scheme;
the second parameter includes at least one of: a maximum layer number corresponding to the second transmission scheme, a codebook subset corresponding to the second transmission scheme, a TPMI corresponding to the second transmission scheme, a TRI corresponding to the second transmission scheme, or a maximum port number of PTRS corresponding to the second transmission scheme.

In combination with some embodiments of the fourth aspect, in some embodiments, after performing the first operation, the method further includes:
sending the first signaling in the first transmission scheme, and/or sending the first signaling in the second transmission scheme.

In combination with some embodiments of the fourth aspect, in some embodiments, the DCI signaling includes at least one of:
DCI format 0_1; or
DCI format 0_2.

In a fifth aspect, an embodiment of the present disclosure proposes a second communication apparatus, including:
a processing module, configured to determine a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports;
where the processing module is further configured to: in a case where the first width is different from the second width, determine, based on the first width and the second width, a seventh width of the first signaling sent by a first device in the first transmission scheme and the second transmission scheme.

In combination with some embodiments of the fifth aspect, in some embodiments, the first signaling includes DCI signaling;
the first indication field is used to indicate an association relationship between DMRS ports and PTRS ports;
the first transmission scheme includes: STRP transmission in STxMP transmission; and
the second transmission scheme includes: SDM transmission or SFN transmission of MTRP in STxMP transmission.

In combination with some embodiments of the fifth aspect, in some embodiments, determining, based on the first width and the second width, the seventh width of the first signaling sent by the first device in the first transmission scheme and the second transmission scheme includes:
determining a first target value, where the first target value is a maximum of the first width and the second width, or the first target value is a value greater than the first width or the second width; and
determining a sum of the first target value and a bit width of indication fields other than the first indication field in the first signaling as the seventh width.

In combination with some embodiments of the fifth aspect, in some embodiments, determining, based on the first width and the second width, the seventh width of the first signaling sent by the first device in the first transmission scheme and the second transmission scheme includes:
determining a fifth width and a sixth width, where the fifth width is a bit width of the first signaling in a case where the first indication field has the first width, and the sixth width is a bit width of the first signaling in a case where the first indication field has the second width;
determining a second target value, where the second target value is a maximum of the fifth width and the sixth width, or the second target value is a value greater than the fifth width or the sixth width; and
determining the second target value as the seventh width.

In combination with some embodiments of the fifth aspect, in some embodiments, determining the first width includes:
determining the first width based on a first parameter, where the first parameter is used to configure a transmission manner of signals in the first transmission scheme; and
determining the second width includes:
   determining the second width based on a second parameter, where the second parameter is used to configure a transmission manner of signals in the second transmission scheme.

In combination with some embodiments of the fifth aspect, in some embodiments, the first parameter includes at least one of: a maximum layer number corresponding to the first transmission scheme, a codebook subset corresponding to the first transmission scheme, a TPMI corresponding to the first transmission scheme, a TRI corresponding to the first transmission scheme, or a maximum port number of PTRS corresponding to the first transmission scheme;
the second parameter includes at least one of: a maximum layer number corresponding to the second transmission scheme, a codebook subset corresponding to the second transmission scheme, a TPMI corresponding to the second transmission scheme, a TRI corresponding to the second transmission scheme, or a maximum port number of PTRS corresponding to the second transmission scheme.

In combination with some embodiments of the fifth aspect, in some embodiments, the method further includes:
demodulating the first signaling received in the first transmission scheme based on the seventh width, and/or demodulating the first signaling received in the second transmission scheme.

In combination with some embodiments of the fifth aspect, in some embodiments, the DCI signaling includes at least one of:
DCI format 0_1; or
DCI format 0_2.

In a sixth aspect, an embodiment of the present disclosure proposes a communication device, the communication device including: one or more processors; one or more memories for storing instructions, where the processors are configured to invoke the instructions to cause the communication device to perform the processing method as described in the first aspect and the second aspect, and optional implementations of the first aspect and the second aspect.

In a seventh aspect, an embodiment of the present disclosure proposes a communication system, the communication system including: a terminal, a network device, where the terminal is configured to perform the method as described in the first aspect and optional implementations of the first aspect, and the network device is configured to perform the method as described in the second aspect and optional implementations of the second aspect.

In an eighth aspect, an embodiment of the present disclosure proposes a storage medium, the storage medium storing instructions, where when the instructions are run on a communication device, the communication device is caused to perform the method as described in the first aspect, optional implementations of the first aspect, the second aspect, and optional implementations of the second aspect.

In a ninth aspect, an embodiment of the present disclosure proposes a program product, where when the program product is executed by a communication device, the communication device is caused to perform the method as described in the first aspect, optional implementations of the first aspect, the second aspect, and optional implementations of the second aspect.

In a tenth aspect, an embodiment of the present disclosure proposes a computer program, where when it is run on a computer, the computer is caused to perform the method as described in the first aspect, optional implementations of the first aspect, the second aspect, and optional implementations of the second aspect.

It is understandable that the above first communication apparatus, second communication apparatus, communication device, communication system, storage medium, program product, and computer program are all used to implement the method proposed in the embodiments of the present disclosure. Therefore, the beneficial effects that can be achieved can be referred to the beneficial effects in the corresponding method, which will not be repeated here.

The embodiments of the present disclosure propose the title of the invention. In some embodiments, the processing method may be interchanged with terms such as information processing method, information sending method, information receiving method, etc., the communication apparatus may be interchanged with terms such as information processing apparatus, information sending apparatus, information receiving apparatus, etc., and terms such as information processing system, communication system, information sending system, information receiving system, etc., may be interchanged.

The embodiments of the present disclosure are not exhaustive, but only illustrative of some embodiments, and are not intended to specifically limit the scope of protection of the present disclosure. In the absence of contradictions, each step in a certain embodiment can be implemented as an independent embodiment, and the steps can be combined arbitrarily. For example, a solution with some steps removed from a certain embodiment can also be implemented as an independent embodiment, and the order of steps in a certain embodiment can be arbitrarily exchanged. In addition, the optional implementation methods in a certain embodiment can be arbitrarily combined; furthermore, the embodiments can be combined arbitrarily. For example, part or all of the steps of different embodiments can be combined arbitrarily, and a certain embodiment can be arbitrarily combined with optional implementation methods of other embodiments.

In the various embodiments of the present disclosure, unless otherwise specified and there is a logical conflict, the terms and/or descriptions among the embodiments are consistent and can be referenced mutually. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise stated, elements expressed in the singular form, such as "a", "an", "the", "said", "above-mentioned", "aforementioned", "this one", etc., may mean "one and only one" or may also mean "one or more", "at least one", etc. For example, when an article such as "a", "an", "the", etc., is used in translation, the noun following the article may be understood as singular or plural.

In the embodiments of the present disclosure, "a plurality of" means two or more.

In some embodiments, terms such as "at least one of", "at least one of", "at least one of", "one or more", "a plurality of", "multiple", etc., can be used interchangeably.

Descriptions in the embodiments of the present disclosure such as "at least one of A, B, C...", "A and/or B and/or C..." etc., include the case where any one of A, B, C... exists alone, and also include any combination of any multiple of A, B, C..., each case can exist alone; for example, "at least one of A, B, C" includes the cases of A alone, B alone, C alone, A and B combination, A and C combination, B and C combination, A, B, and C combination; for example, A and/or B includes the cases of A alone, B alone, and the combination of A and B.

In some embodiments, descriptions such as "in case A, in another case B", "in response to case A, in response to another case B", etc., may include the following technical solutions according to the situation: performing A regardless of B, i.e., in some embodiments A; performing B regardless of A, i.e., in some embodiments B; selectively performing A or B, i.e., in some embodiments choosing to perform either A or B; performing both A and B, i.e., in some embodiments A and B. It is similar when there are more branches such as A, B, C, etc.

The prefix words such as "first", "second", etc., in the embodiments of the present disclosure are only used to distinguish different described objects and do not limit the position, order, priority, quantity, or content of the described objects. The description of the objects refers to the description in the claims or the context of the embodiments, and should not be considered as additional limitations due to the use of the prefix words. For example, if the described object is a "field", the ordinal numbers before "field" in "first field" and "second field" do not limit the position or order between the fields, "first" and "second" do not limit whether the modified "fields" are in the same message, nor do they limit the sequence of "first field" and "second field". Another example, if the described object is a "level", the ordinal numbers before "level" in "first level" and "second level" do not limit the priority between the levels. Yet another example, the quantity of the described object is not limited by ordinal numbers, it can be one or more. Taking "first device" as an example, the quantity of "device" can be one or more. In addition, objects modified by different prefix words can be the same or different. For example, if the described object is a "device", "first device" and "second device" can be the same device or different devices, and their types can be the same or different; another example, if the described object is "information", "first information" and "second information" can be the same information or different information, and their content can be the same or different.

In some embodiments, "including A", "containing A", "used to indicate A", "carrying A" can be interpreted as directly carrying A or indirectly indicating A.

In some embodiments, terms such as "in response to...", "in response to determining...", "in the case of...", "when...", "if...", etc., can be used interchangeably.

In some embodiments, terms such as "greater than", "greater than or equal to", "not less than", "more than", "more than or equal to", "not less than", "higher than", "higher than or equal to", "not lower than", "above", etc., can be used interchangeably; terms such as "less than", "less than or equal to", "not greater than", "less than", "less than or equal to", "not more than", "lower than", "lower than or equal to", "not higher than", "below", etc., can be used interchangeably.

In some embodiments, an apparatus, etc., can be interpreted as physical or virtual, and its name is not limited to the name recorded in the embodiments. Terms such as "apparatus", "equipment", "device", "circuit", "network element", "node", "function", "unit", "section", "system", "network", "chip", "chip system", "entity", "subject", etc., can be used interchangeably.

In some embodiments, "network" can be interpreted as devices included in the network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission / reception point (TRP)", "panel", "antenna panel", "antenna array", "cell", "macro cell", "small cell", "femto cell", "pico cell", "sector", "cell group", "carrier", "component carrier", "bandwidth part (BWP)", etc., can be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., can be used interchangeably.

In some embodiments, an access network device, a core network device, or a network device can be replaced by a terminal. For example, the structures where communication between an access network device, a core network device, or a network device and a terminal is replaced by communication between multiple terminals (e.g., which may also be called device-to-device (D2D), vehicle-to-everything (V2X), etc.) may also apply to the various embodiments of the present disclosure. In this case, the terminal may have all or part of the functions of the access network device. In addition, terms such as "uplink", "downlink", etc., may also be replaced by terms corresponding to terminal-to-terminal communication (e.g., "side"). For example, uplink channels, downlink channels, etc., may be replaced by side channels; uplink, downlink, etc., may be replaced by side link.

In some embodiments, a terminal may be replaced by an access network device, a core network device, or a network device. In this case, the access network device, core network device, or network device may have all or part of the functions of the terminal.

In some embodiments, obtaining data, information, etc., may comply with the laws and regulations of the country where it is located.

In some embodiments, data, information, etc., may be obtained after obtaining user consent.

Furthermore, each element, each row, or each column in the tables of the embodiments of the present disclosure can be implemented as an independent embodiment. Any combination of elements, rows, or columns can also be implemented as an independent embodiment.

The correspondences shown in the tables of the present disclosure may be configured or pre-defined. The values of the information in each table are only examples and can be configured as other values, which is not limited in the present disclosure. When configuring the correspondences between configuration information and parameters, it is not necessary to configure all the correspondences illustrated in the tables. For example, in the tables of the present disclosure, the correspondences shown in certain rows may not be configured. Also, appropriate adjustments such as splitting, merging, etc., can be made based on the above tables. The names of the parameters shown in the titles of the above tables may also be other names understandable by communication devices, and the values or representations of the parameters may also be other values or representations understandable by communication devices. The above tables may also be implemented using other data structures, such as arrays, queues, containers, stacks, linear lists, pointers, linked lists, trees, graphs, structures, classes, heaps, hash tables, etc.

Predefined in the present disclosure may be understood as defined, pre-defined, stored, prestored, pre-negotiated, pre-configured, solidified, or pre-burned.

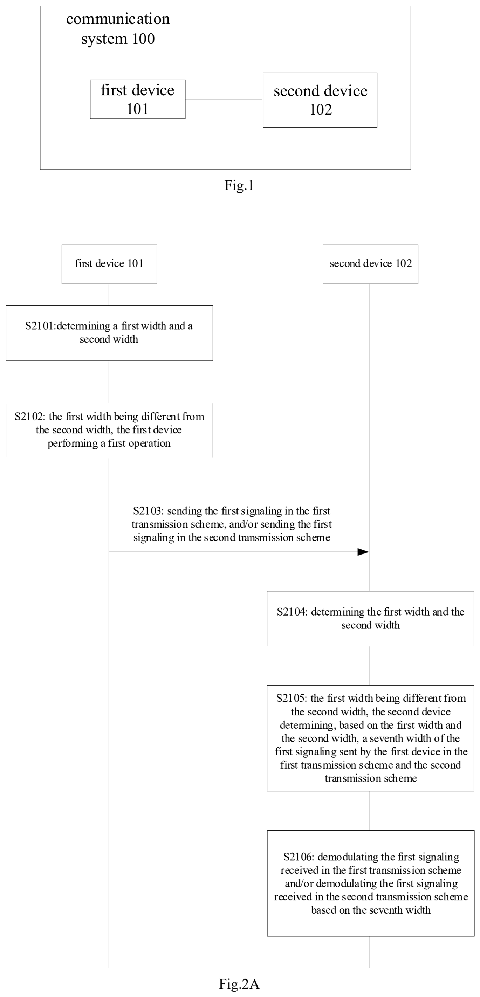

FIG. 1 is a schematic architectural diagram of a communication system according to an embodiment of the present disclosure. As shown in FIG. 1, a communication system 100 may include a first device (terminal) 101 and a second device 102. Here, the first device may be a network device, and the second device may be a terminal; optionally, the network device may be at least one of an access network device and a core network device.

In some embodiments, a UE includes, for example, at least one of a mobile phone, a wearable device, an IoT device, a vehicle with communication capabilities, a smart car, a pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but is not limited thereto.

In some embodiments, an access network device is, for example, a node or device that connects a terminal to a wireless network. The access network device may include at least one of an evolved NodeB (eNB) in 5G communication systems, a next generation evolved NodeB (ng-eNB), a next generation NodeB (gNB), a Node B (NB), a home Node B (HNB), a home evolved NodeB (HeNB), a wireless backhaul device, a radio network controller (RNC), a base station controller (BSC), a base transceiver station (BTS), a baseband unit (BBU), a mobile switching center, a base station in 6G communication systems, an Open RAN, a Cloud RAN, a base station in other communication systems, an access node in a wireless fidelity (WiFi) system, but is not limited thereto.

In some embodiments, the technical solutions of the present disclosure may be applied to an Open RAN architecture. In this case, interfaces between access network devices or within an access network device involved in the embodiments of the present disclosure may become internal interfaces of the Open RAN, and the processes and information exchange between these internal interfaces may be implemented by software or programs.

In some embodiments, an access network device may be composed of a central unit (CU) and a distributed unit (DU), where the CU may also be called a control unit. Using the CU-DU structure, the protocol layers of the access network device can be split, with the functions of some protocol layers placed in the CU for centralized control, and the remaining part or all of the protocol layer functions distributed in the DU, controlled centrally by the CU, but not limited thereto.

In some embodiments, a core network device may be one device, including one or more network elements, or may be multiple devices or device groups, respectively including all or part of one or more network elements. A network element may be virtual or physical. A core network includes, for example, at least one of an Evolved Packet Core (EPC), a 5G Core Network (5GCN), a Next Generation Core (NGC).

It is understandable that the communication system described in the embodiments of the present disclosure is to illustrate the technical solutions of the embodiments of the present disclosure more clearly and does not constitute a limitation on the technical solutions proposed in the embodiments of the present disclosure. Those skilled in the art will understand that as system architectures evolve and new business scenarios emerge, the technical solutions proposed in the embodiments of the present disclosure are equally applicable to similar technical problems.

The following embodiments of the present disclosure may be applied to the communication system 100 shown in FIG. 1, or part of the subjects, but are not limited thereto. The subjects shown in FIG. 1 are examples. The communication system may include all or part of the subjects in FIG. 1, and may also include other subjects not shown in FIG. 1. The number and form of the subjects are arbitrary. The connection relationships between the subjects are examples. The subjects may not be connected or may be connected. The connection may be in any manner, direct or indirect, wired or wireless.

The embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other processing methods, next-generation systems based on them, etc. Moreover, multiple systems may also be combined (e.g., a combination of LTE or LTE-A with 5G, etc.).

In communication systems, to achieve higher throughput and more reliable transmission performance, a transmission scheme based on simultaneous transmission across multiple panels (STxMP) is introduced. In R18 multi-panel (antenna) uplink transmission STxMP, scheduling of a Physical Uplink Shared Channel (PUSCH) using Space Division Multiplexing (SDM) transmission or Single Frequency Network (SFN) transmission in MTRP transmission based on S-DCI is supported. Also, dynamic switching between STRP and MTRP in STxMP transmission is supported. Therefore, a network device typically indicates in a dynamic switching indication field of DCI (e.g., a sounding reference signal resource set indicator (SRS resource set indicator)) whether it is currently STRP transmission or MTRP transmission. However, because the width of the indication field in DCI signaling used to indicate the association relationship between ports in STRP transmission is different from that in MTRP transmission, the DCI width in STRP transmission is also different from that in MTRP transmission. However, when a terminal demodulates DCI, it typically needs to verify the DCI based on its width. The way the terminal knows the DCI width is: the terminal first needs to demodulate the dynamic switching indication field in the DCI to determine whether it is currently STRP transmission or MTRP transmission, and then combine other scheduling parameters to determine the width of the indication field indicating the association between ports in the DCI, and then determine the width of the DCI. This results in the terminal not knowing the width of the DCI and the width of the indication field indicating the association between ports in the DCI before demodulating the DCI, causing the terminal to need to perform blind detection on the DCI, which wastes resources, increases demodulation delay, and affects communication efficiency.

FIG. 2A is an interaction diagram of a processing method according to an embodiment of the present disclosure. As shown in FIG. 2A, this embodiment of the present disclosure relates to a processing method for a communication system 100, the method including:
Step 2101: a first device 101 determining a first width and a second width.

Optionally, the first device 101 may be a network device.

Optionally, in some embodiments, the first width is a bit width required for a first indication field of a first signaling in a first transmission scheme, and the second width is a bit width required for the first indication field of the first signaling in a second transmission scheme.

Optionally, in some embodiments, the first signaling may include DCI signaling; optionally, the DCI signaling may include at least one of: DCI format 0_1; DCI format 0_2, etc.

The first transmission scheme may include: single transmission reception point (STRP) transmission in simultaneous transmission across multiple panels (STxMP) transmission; the second transmission scheme may include: space division multiplexing (SDM) transmission or single frequency network (SFN) transmission of a multi transmission reception point (MTRP) in STxMP transmission. Optionally, the first device 101 may configure STxMP transmission as one of {SDM, SFN} via radio resource control (RRC) signaling.

The first indication field may be used to indicate an association relationship between different ports. For example, the first indication field may be used to indicate an association relationship between a demodulation reference signal (DMRS) port and a phase tracking reference signal (PTRS) port.

Optionally, in some embodiments, the first device 101 may determine the first width in various ways, which is not limited in the present disclosure. For example, the first device 101 may determine the first width based on a first parameter. The first parameter may be a related parameter under the first transmission scheme. The first parameter may be used to configure a transmission manner of signals in the first transmission scheme, or the first parameter may be used to indicate configuration parameters related to transmission in the first transmission scheme. For example, the first parameter may be a maximum layer number corresponding to the first transmission scheme, a codebook subset corresponding to the first transmission scheme, a transmit precoding matrix indicator (TPMI) corresponding to the first transmission scheme, a transmit rank indicator (TRI) corresponding to the first transmission scheme, a maximum port number of PTRS corresponding to the first transmission scheme; for another example, the first device 101 may determine the first width based on local configuration; for yet another example, the first device 101 may determine the first width based on previous interactions with the second device 102.

The first device 101 may determine the second width in various ways, which is not limited in the present disclosure. For example, the first device 101 may determine the second width based on a second parameter. The second parameter may be a related parameter under the second transmission scheme. The second parameter may be used to configure a transmission manner of signals in the second transmission scheme, or the second parameter may be used to indicate configuration parameters related to transmission in the second transmission scheme. For example, the second parameter may be a maximum layer number corresponding to the second transmission scheme, a codebook subset corresponding to the second transmission scheme, a transmit precoding matrix indicator (TPMI) corresponding to the second transmission scheme, a transmit rank indicator (TRI) corresponding to the second transmission scheme, a maximum port number of PTRS corresponding to the second transmission scheme; for another example, the first device 101 may determine the second width based on local configuration; for yet another example, the first device 101 may determine the second width based on previous interactions with the second device 102.

Optionally, when the first device 101 determines the first width based on TRI, the first device 101 preferably determines the second width based on TRI.

Optionally, in some embodiments, the maximum layer number corresponding to the first transmission scheme, the maximum layer number corresponding to the second transmission scheme, the codebook subset, TPMI, TRI, and the maximum port number of PTRS may be predetermined by the first device 101.

Optionally, in some embodiments, the "first width required for the first indication field of the first signaling in the first transmission scheme" may be understood as: the bit width (e.g., the minimum bit width) required for the first indication field on the premise that the association relationship between ports in the first transmission scheme can be clearly indicated. Similarly, the "second width required for the first indication field of the first signaling in the second transmission scheme" may be understood as: the bit width (e.g., the minimum bit width) required for the first indication field on the premise that the association relationship between ports in the second transmission scheme can be clearly indicated.

Step 2102: in a case where the first width is different from the second width, the first device 101 performing a first operation.

Optionally, in some embodiments, the case where the first width is different from the second width may include any of the following:
the first indication field exists in the first signaling of both the first transmission scheme and the second transmission scheme, and the first width is different from the second width;
one of the first signaling in the first transmission scheme and the first signaling in the second transmission scheme does not include the first indication field.

Here, in a case where the first signaling in the first transmission scheme does not include the first indication field, the first width is 0; in a case where the first signaling in the second transmission scheme does not include the first indication field, the second width is 0.

Optionally, in some embodiments, the first operation may be used to make the width of the first signaling to be sent in the first transmission scheme the same as the width of the first signaling to be sent in the second transmission scheme.

Optionally, the "first signaling to be sent in the first transmission scheme" may be understood as: the first signaling that the first device 101 needs to send to the second device 102 in the first transmission scheme, or may be understood as: in the first transmission scheme, the first signaling received by the second device 102 sent by the first device 101. The "first signaling to be sent in the second transmission scheme" may be understood as: the first signaling that the first device 101 needs to send to the second device 102 in the second transmission scheme, or may be understood as: in the second transmission scheme, the first signaling received by the second device 102 sent by the first device 101.

Optionally, in some embodiments, performing the first operation may include the following steps:
Step 2102a1: determining a first target value.

Optionally, the first target value is a maximum of the first width and the second width, or the first target value is a value greater than the first width or the second width. Optionally, when the first target value is a value greater than the first width or the second width, the first target value may be calculated based on a first preset rule. The first preset rule may be agreed by a protocol, or may be configured by the first device 101 to the second device 102. The first preset rule may be, for example: adding a first fixed value to the maximum of the first width and the second width to obtain the first target value.

Optionally, the first target value may also be a preconfigured value, and the first target value is greater than the first width and the second width. For example, the first target value may be preconfigured to be selectable from 8, 16, 64, 128, etc.; if the first width is 6 and the second width is 18, then the first target value may be selected as 64, 128, etc. Here, the first target value may be the smallest value among the preconfigured values that is greater than the first width and the second width, for example, the first target value is 64 rather than 128.

Step 2102a2: performing a zero-padding operation on the first indication field, so that both a third width and a fourth width are the first target value.

Optionally, in some embodiments, the third width is a bit width of the first indication field subjected to the zero-padding operation of the first signaling to be sent in the first transmission scheme, and the fourth width is a bit width of the first indication field subjected to the zero-padding operation of the first signaling to be sent in the second transmission scheme.

Optionally, the zero-padding operation may be performed on the first indication field of the first signaling in the first transmission scheme. For example, if the first width is less than the second width and the first target value is the second width, then a zero-padding operation may be performed on the first indication field of the first signaling in the first transmission scheme.

Alternatively, the zero-padding operation may be performed on the first indication field of the first signaling in the second transmission scheme. For example, if the first width is greater than the second width and the first target value is the first width, then a zero-padding operation may be performed on the first indication field of the first signaling in the second transmission scheme.

Alternatively, the zero-padding operation may be performed on the first indication field of the first signaling in the first transmission scheme and the first indication field of the first signaling in the second transmission scheme. For example, if the first target value is a value greater than the first width and the second width, then a zero-padding operation may be performed on the first indication field of the first signaling in the first transmission scheme, and a zero-padding operation may be performed on the first indication field of the first signaling in the second transmission scheme.

Optionally, by performing step 2102a2, the width of the first indication field of the first signaling to be sent in the first transmission scheme and the width of the first indication field of the first signaling to be sent in the second transmission scheme are made the same, both being the first target value. Here, since the widths of indication fields other than the first indication field in the first signaling are the same in different transmission schemes, making the width of the first indication field of the first signaling in the first transmission scheme the same as the width of the first indication field of the first signaling in the second transmission scheme means making the width of the first signaling in the first transmission scheme the same as the width of the first signaling in the second transmission scheme.

Optionally, in other embodiments, performing the first operation may include the following steps:
Step 2102b1: determining a fifth width and a sixth width.

Optionally, the fifth width is a bit width of the first signaling in a case where the first indication field has the first width, and the sixth width is a bit width of the first signaling in a case where the first indication field has the second width.

Optionally, the method for determining the fifth width may include: adding the first width to the bit width of indication fields other than the first indication field in the first signaling to obtain the fifth width; the method for determining the sixth width may include: adding the second width to the bit width of indication fields other than the first indication field in the first signaling to obtain the sixth width.

Optionally, the bit width of indication fields other than the first indication field in the first signaling is known in advance to the first device 101 and the second device 102.

Step 2102b2: determining a second target value.

Optionally, the second target value is a maximum of the fifth width and the sixth width, or the second target value is a value greater than the fifth width or the sixth width. Optionally, when the second target value is a value greater than the fifth width or the sixth width, the second target value may be calculated based on a second preset rule. The second preset rule may be agreed by a protocol, or may be configured by the first device 101 to the second device 102. The second preset rule may be, for example: adding a second fixed value to the maximum of the fifth width and the sixth width to obtain the second target value.

Step 2102b3: performing a zero-padding operation on the first signaling, so that both a seventh width and an eighth width are the second target value.

Optionally, the seventh width is a bit width of the first signaling subjected to the zero-padding operation and to be sent in the first transmission scheme, and the eighth width is a bit width of the first signaling subjected to the zero-padding operation and to be sent in the second transmission scheme.

Optionally, the zero-padding operation may be performed on the first signaling in the first transmission scheme. For example, if the fifth width is less than the sixth width and the second target value is the sixth width, then a zero-padding operation may be performed on the first signaling in the first transmission scheme.

Alternatively, the zero-padding operation may be performed on the first signaling in the second transmission scheme. For example, if the fifth width is greater than the sixth width and the second target value is the fifth width, then a zero-padding operation may be performed on the first signaling in the second transmission scheme.

Alternatively, the zero-padding operation may be performed on the first signaling in the first transmission scheme and the first signaling in the second transmission scheme. For example, if the second target value is a value greater than the fifth width and the sixth width, then a zero-padding operation may be performed on the first signaling in the first transmission scheme, and a zero-padding operation may be performed on the first signaling in the second transmission scheme.

Optionally, in some embodiments, the first device 101 may perform the first operation when it is determined to perform at least one of initial access, cell reselection, cell handover, or BWP switching.

Step 2103: the first device 101 sending the first signaling in the first transmission scheme, and/or sending the first signaling in the second transmission scheme.

Step 2104: the second device 102 determining the first width and the second width.

Optionally, the second device 102 may be a terminal.

Relevant descriptions of the first width and the second width may refer to the above embodiments.

Optionally, the second device 102 may determine the first width based on the first parameter and determine the second width based on the second parameter. Detailed descriptions of the first parameter and the second parameter may refer to the above embodiments.

Optionally, the first parameter and the second parameter may be pre-configured by the first device 101 to the second device 102.

Step 2105: in a case where the first width is different from the second width, the second device 102 determining, based on the first width and the second width, a seventh width of the first signaling sent by the first device 101 in the first transmission scheme and the second transmission scheme.

Detailed descriptions of "the first width being different from the second width" may refer to the above embodiments.

Optionally, in some embodiments, the method for determining, based on the first width and the second width, the seventh width of the first signaling sent by the first device 101 in the first transmission scheme and the second transmission scheme may include the following steps:
Step 2105a1: determining a first target value.

Optionally, the first target value is a maximum of the first width and the second width, or the first target value is a value greater than the first width or the second width. Optionally, when the first target value is a value greater than the first width or the second width, the first target value may be calculated based on a first preset rule. The first preset rule may be agreed by a protocol, or may be configured by the first device 101 to the second device 102. The first preset rule may be, for example: adding a first fixed value to the maximum of the first width and the second width to obtain the first target value.

Optionally, in some embodiments, the first target value may be the width of the first indication field in the first signaling sent in the first transmission scheme and the width of the first indication field in the first signaling sent in the second transmission scheme.

Step 2105a2: determining a sum of the first target value and the width of indication fields other than the first indication field in the first signaling as the seventh width.

Optionally, in other embodiments, the method for determining, based on the first width and the second width, the seventh width of the first signaling sent by the first device 101 in the first transmission scheme and the second transmission scheme may include the following steps:
Step 2105b1: determining a fifth width and a sixth width.

Detailed descriptions of the fifth width and the sixth width may refer to the above embodiments.

Step 2105b2: determining a second target value.

Optionally, the second target value is a maximum of the fifth width and the sixth width, or the second target value is a value greater than the fifth width or the sixth width. Optionally, when the second target value is a value greater than the fifth width or the sixth width, the second target value may be calculated based on a second preset rule. The second preset rule may be agreed by a protocol, or may be configured by the first device 101 to the second device 102. The second preset rule may be, for example: adding a second fixed value to the maximum of the fifth width and the sixth width to obtain the second target value.

Step 2105b3: determining the second target value as the seventh width.

In this case, the width of the first indication field in the first signaling sent in the first transmission scheme is the first width, and the width of the first indication field in the first signaling sent in the second transmission scheme is the second width.

Step 2106: the second device 102 demodulating the first signaling received in the first transmission scheme and/or demodulating the first signaling received in the second transmission scheme based on the seventh width.

Optionally, in some embodiments, when the seventh width is determined using steps 2105a1-2105a2 in step 2105 above, the second device 102 may demodulate the first signaling received in the first transmission scheme and/or the first signaling received in the second transmission scheme based on the first target value and the seventh width. Optionally, the first device 101 may first determine that the width of the first signaling received in the first transmission scheme and the width of the first signaling received in the second transmission scheme are both the seventh width, and that the width of the first indication field in the first signaling received in the first transmission scheme and the width of the first indication field in the first signaling received in the second transmission scheme are both the first target value. Then, the first device 101 may first decode the first signaling in the first transmission scheme or the second transmission scheme based on the seventh width. Afterwards, based on the first target value, it determines the first indication field from the first signaling in the first transmission scheme or the second transmission scheme, then extracts the information carried in the first indication field to learn the association relationship between ports.

Optionally, in some embodiments, when the seventh width is determined using steps 2105b1-2105b3 in step 2105 above, the second device 102 demodulates the first signaling received in the first transmission scheme and/or the first signaling received in the first transmission scheme based on the first width, the second width, and the seventh width. Optionally, the first device 101 may first determine that the width of the first signaling received in the first transmission scheme and the width of the first signaling received in the second transmission scheme are both the seventh width, and that the width of the first indication field in the first signaling received in the first transmission scheme is the first width, and the width of the first indication field in the first signaling received in the second transmission scheme is the second width. Then, the first device 101 may first decode the first signaling in the first transmission scheme or the second transmission scheme based on the seventh width. Afterwards, based on the first width, it determines the first indication field from the first signaling in the first transmission scheme, then extracts the information carried in the first indication field to learn the association relationship between ports in the first transmission scheme; and/or, based on the second width, it determines the first indication field from the first signaling in the second transmission scheme, then extracts the information carried in the first indication field to learn the association relationship between ports in the second transmission scheme.

The processing method involved in the embodiments of the present disclosure may include at least one of steps S2101 to S2106. For example, step S2101 may be implemented as an independent embodiment, step S2102 may be implemented as an independent embodiment, step S2103 may be implemented as an independent embodiment, step S2101+S2102 may be implemented as an independent embodiment, but not limited thereto.

In this embodiment, under the condition of no contradiction, each step may be independent, arbitrarily combined, or exchanged in order, optional methods or examples may be arbitrarily combined, and may be arbitrarily combined with any step of other implementations or other embodiments.

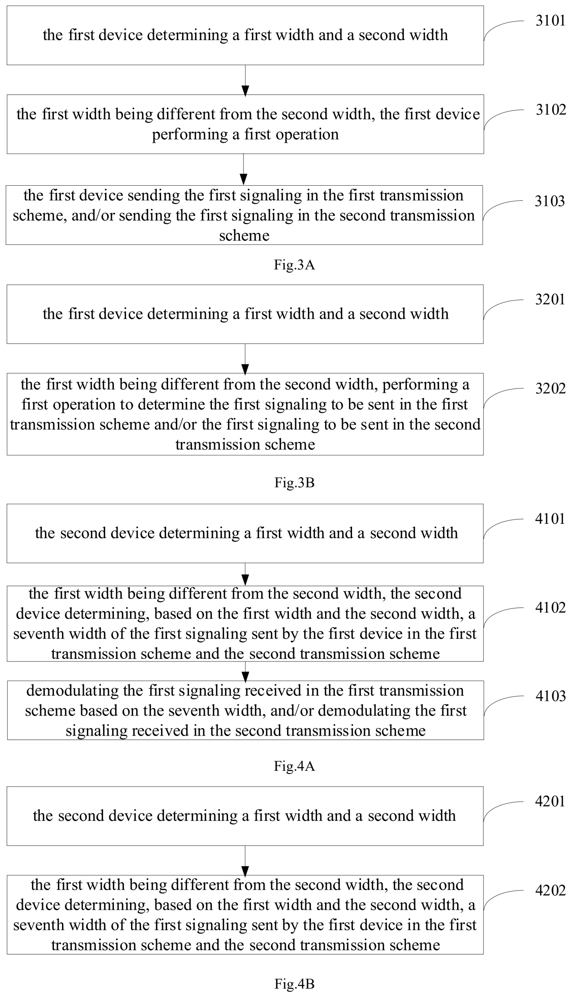

FIG. 3A is an interaction diagram of a processing method according to an embodiment of the present disclosure. As shown in FIG. 3A, this embodiment of the present disclosure relates to a processing method for a first device 101, the method including:
Step 3101: the first device 101 determining a first width and a second width.
Step 3102: in a case where the first width is different from the second width, the first device 101 performing a first operation.
Step 3103: the first device 101 sending the first signaling in the first transmission scheme, and/or sending the first signaling in the second transmission scheme.

Detailed descriptions of steps 3101-3103 may refer to the above embodiments.

The processing method involved in the embodiments of the present disclosure may include at least one of steps S3101 to S3103. For example, step S3101 may be implemented as an independent embodiment, step S3102 may be implemented as an independent embodiment, step S3101+S3102 may be implemented as an independent embodiment, but not limited thereto.

In this embodiment, under the condition of no contradiction, each step may be independent, arbitrarily combined, or exchanged in order, optional methods or examples may be arbitrarily combined, and may be arbitrarily combined with any step of other implementations or other embodiments.

FIG. 3B is an interaction diagram of a processing method according to an embodiment of the present disclosure. As shown in FIG. 3B, this embodiment of the present disclosure relates to a processing method for a first device 101, the method including:
Step 3201: the first device 101 determining a first width and a second width.
Step 3202: in a case where the first width is different from the second width, performing a first operation to determine the first signaling to be sent in the first transmission scheme and/or the first signaling to be sent in the second transmission scheme.

Optionally, the first width is a bit width required for a first indication field of a first signaling in a first transmission scheme, and the second width is a bit width required for the first indication field of the first signaling in a second transmission scheme, where the first indication field is used to indicate an association relationship between different ports.

Optionally, the first operation is used to make a bit width of the first signaling to be sent in the first transmission scheme the same as a bit width of the first signaling to be sent in the second transmission scheme.

Optionally, the first signaling includes downlink control information (DCI) signaling;
the first indication field is used to indicate an association relationship between a demodulation reference signal (DMRS) port and a phase tracking reference signal (PTRS) port;
the first transmission scheme includes: single transmission reception point (STRP) transmission in simultaneous transmission across multiple panels (STxMP) transmission;
the second transmission scheme includes: space division multiplexing (SDM) transmission or single frequency network (SFN) transmission of a multi transmission reception point (MTRP) in STxMP transmission.

Optionally, before performing the first operation, the method further includes at least one of:
determining to perform an initial access;
determining to perform a cell reselection;
determining to perform a cell handover; or
determining to perform a bandwidth part (BWP) switching.

Optionally, performing the first operation includes:
determining a first target value, where the first target value is a maximum of the first width and the second width, or the first target value is a value greater than the first width or the second width; and
performing a zero-padding operation on the first indication field, so that both a third width and a fourth width are the first target value, where the third width is a bit width of the first indication field subjected to the zero-padding operation of the first signaling to be sent in the first transmission scheme, and the fourth width is a bit width of the first indication field subjected to the zero-padding operation of the first signaling to be sent in the second transmission scheme.

Optionally, performing the first operation includes:
determining a fifth width and a sixth width, wherein the fifth width is a bit width of the first signaling in a case where the first indication field has the first width, and the sixth width is a bit width of the first signaling in a case where the first indication field has the second width;
determining a second target value, wherein the second target value is a maximum of the fifth width and the sixth width, or the second target value is a value greater than the fifth width or the sixth width; and
performing a zero-padding operation on the first signaling to make both a seventh width and an eighth width to be the second target value, wherein the seventh width is a bit width of the first signaling subjected to the zero-padding operation and to be sent in the first transmission scheme, and the eighth width is a bit width of the first signaling subjected to the zero-padding operation and to be sent in the second transmission scheme.

Optionally, determining the first width includes:
determining the first width based on a first parameter, where the first parameter is used to configure a transmission manner of signals in the first transmission scheme; and
determining the second width includes:
   determining the second width based on a second parameter, where the second parameter is used to configure a transmission manner of signals in the second transmission scheme.

Optionally, the first parameter includes at least one of: a maximum layer number corresponding to the first transmission scheme, a codebook subset corresponding to the first transmission scheme, a transmit precoding matrix indicator (TPMI) corresponding to the first transmission scheme, a transmit rank indicator (TRI) corresponding to the first transmission scheme, or a maximum port number of PTRS corresponding to the first transmission scheme;
the second parameter includes at least one of: a maximum layer number corresponding to the second transmission scheme, a codebook subset corresponding to the second transmission scheme, a TPMI corresponding to the second transmission scheme, a TRI corresponding to the second transmission scheme, or a maximum port number of PTRS corresponding to the second transmission scheme.

Optionally, after performing the first operation, the method further includes:
sending the first signaling in the first transmission scheme, and/or sending the first signaling in the second transmission scheme.

Optionally, the DCI signaling includes at least one of:
DCI format 0_1; or
DCI format 0_2.

Detailed descriptions of steps 3201-3202 may refer to the above embodiments.

The processing method involved in the embodiments of the present disclosure may include at least one of steps S3201 to S3203. For example, step S3201 may be implemented as an independent embodiment, step S3202 may be implemented as an independent embodiment, but not limited thereto.

In this embodiment, under the condition of no contradiction, each step may be independent, arbitrarily combined, or exchanged in order, optional methods or examples may be arbitrarily combined, and may be arbitrarily combined with any step of other implementations or other embodiments.

FIG. 4A is an interaction diagram of a processing method according to an embodiment of the present disclosure. As shown in FIG. 4A, this embodiment of the present disclosure relates to a processing method for a second device 102, the method including:
Step 4101: the second device 102 determining a first width and a second width.
Step 4102: in a case where the first width is different from the second width, the second device 102 determining, based on the first width and the second width, a seventh width of the first signaling sent by the first device 101 in the first transmission scheme and the second transmission scheme.
Step 4103: demodulating the first signaling received in the first transmission scheme based on the seventh width, and/or demodulating the first signaling received in the second transmission scheme.

Detailed descriptions of steps 4101-4103 may refer to the above embodiments.

In this embodiment, under the condition of no contradiction, each step may be independent, arbitrarily combined, or exchanged in order, optional methods or examples may be arbitrarily combined, and may be arbitrarily combined with any step of other implementations or other embodiments.

FIG. 4B is an interaction diagram of a processing method according to an embodiment of the present disclosure. As shown in FIG. 4B, this embodiment of the present disclosure relates to a processing method for a second device 102, the method including:
Step 4201: the second device 102 determining a first width and a second width.
Step 4202: in a case where the first width is different from the second width, the second device 102 determining, based on the first width and the second width, a seventh width of the first signaling sent by the first device 101 in the first transmission scheme and the second transmission scheme.

Optionally, the first width is a bit width required for a first indication field of a first signaling in a first transmission scheme, and the second width is a bit width required for the first indication field of the first signaling in a second transmission scheme, where the first indication field is used to indicate an association relationship between different ports.

Optionally, the first signaling includes DCI signaling;
the first indication field is used to indicate an association relationship between DMRS ports and PTRS ports;
the first transmission scheme includes: STRP transmission in STxMP transmission; and
the second transmission scheme includes: SDM transmission or SFN transmission of MTRP in STxMP transmission.

Optionally, determining, based on the first width and the second width, the seventh width of the first signaling sent by the first device 101 in the first transmission scheme and the second transmission scheme includes:
determining a first target value, where the first target value is a maximum of the first width and the second width, or the first target value is a value greater than the first width or the second width; and
determining a sum of the first target value and a bit width of indication fields other than the first indication field in the first signaling as the seventh width.

Optionally, determining, based on the first width and the second width, the seventh width of the first signaling sent by the first device 101 in the first transmission scheme and the second transmission scheme includes:
determining a fifth width and a sixth width, where the fifth width is a bit width of the first signaling in a case where the first indication field has the first width, and the sixth width is a bit width of the first signaling in a case where the first indication field has the second width;
determining a second target value, where the second target value is a maximum of the fifth width and the sixth width, or the second target value is a value greater than the fifth width or the sixth width; and
determining the second target value as the seventh width.

Optionally, determining the first width includes:
determining the first width based on a first parameter, where the first parameter is used to configure a transmission manner of signals in the first transmission scheme; and
determining the second width includes:
   determining the second width based on a second parameter, where the second parameter is used to configure a transmission manner of signals in the second transmission scheme.

Optionally, the first parameter includes at least one of: a maximum layer number corresponding to the first transmission scheme, a codebook subset corresponding to the first transmission scheme, a TPMI corresponding to the first transmission scheme, a TRI corresponding to the first transmission scheme, or a maximum port number of PTRS corresponding to the first transmission scheme;

the second parameter includes at least one of: a maximum layer number corresponding to the second transmission scheme, a codebook subset corresponding to the second transmission scheme, a TPMI corresponding to the second transmission scheme, a TRI corresponding to the second transmission scheme, or a maximum port number of PTRS corresponding to the second transmission scheme.

Optionally, the method further includes:
demodulating the first signaling received in the first transmission scheme based on the seventh width, and/or demodulating the first signaling received in the second transmission scheme.

Optionally, the DCI signaling includes at least one of:
DCI format 0_1; or
DCI format 0_2.

Detailed descriptions of steps 4201-4202 may refer to the above embodiments.

The processing method involved in the embodiments of the present disclosure may include at least one of steps S4201 to S4202. For example, step S4201 may be implemented as an independent embodiment, step S4202 may be implemented as an independent embodiment, but not limited thereto.

In this embodiment, under the condition of no contradiction, each step may be independent, arbitrarily combined, or exchanged in order, optional methods or examples may be arbitrarily combined, and may be arbitrarily combined with any step of other implementations or other embodiments.

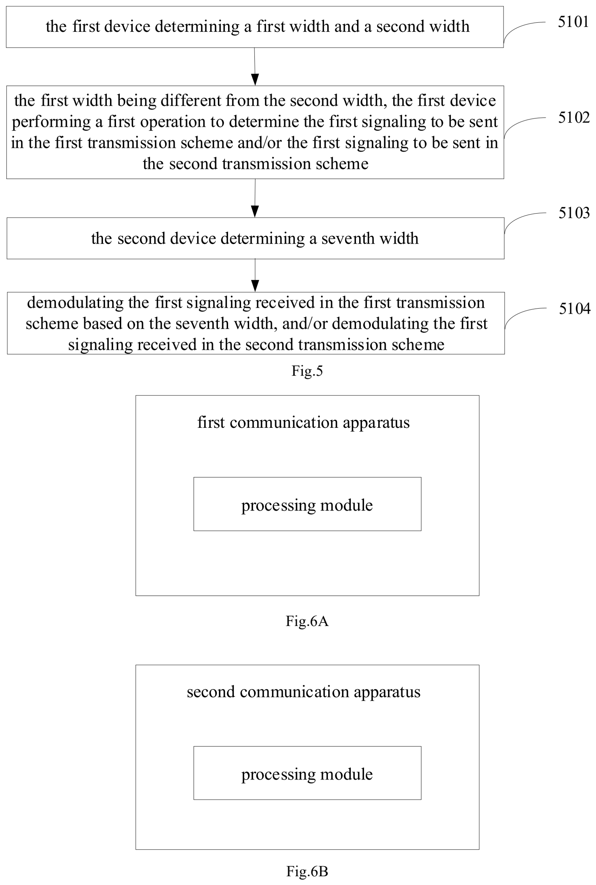

FIG. 5 is a flow diagram of a processing method according to an embodiment of the present disclosure. As shown in FIG. 5, this embodiment of the present disclosure relates to a processing method for a communication system, the method including at least one of:
Step 5101: the first device 101 determining a first width and a second width.
Step 5102: in a case where the first width is different from the second width, the first device 101 performing a first operation to determine the first signaling to be sent in the first transmission scheme and/or the first signaling to be sent in the second transmission scheme.
Step 5103: the second device 102 determining a seventh width.
Step 5104: demodulating the first signaling received in the first transmission scheme based on the seventh width, and/or demodulating the first signaling received in the second transmission scheme.

Optional implementations of steps 5101-5104 may refer to the above embodiments.

In some embodiments, the above method may include methods of the embodiments described from the perspective of the communication system side, the first device side, the second device side, etc., which will not be repeated here.

The processing method involved in the embodiments of the present disclosure may include at least one of steps S5101 to S5104. For example, step S5101 may be implemented as an independent embodiment, step S5102 may be implemented as an independent embodiment, step S5101+S5102 may be implemented as an independent embodiment, but not limited thereto.

In this embodiment, under the condition of no contradiction, each step may be independent, arbitrarily combined, or exchanged in order, optional methods or examples may be arbitrarily combined, and may be arbitrarily combined with any step of other implementations or other embodiments.

The following is an exemplary description of the above methods.

The present disclosure provides a method for determining the DCI bit number of the PTRS-DMRS association indication field in STxMP transmission. Optional implementation schemes are as follows:
determining the indication field bit number and zero padding method.
configuring STxMP transmission as one of {SDM, SFN} according to RRC signaling, thereby determining the specific STxMP transmission scheme.
determining the maximum bit numbers M and N corresponding to this DCI indication field under the STRP and the corresponding STxMP transmission scheme, respectively, according to RRC-configured different maximum layer numbers (maxRank, maxRank'), the maximum PTRS port number, and codebook subset parameters, etc.

Further determine the actual alignment method for this indication field used for DCI transmission and the actual bit number of the DCI indication field:
Case 1: For the case where the PTRS-DMRS association indication field exists in both STRP and SDM/SFN.

Alt. 1: For the bit numbers of the PTRS-DMRS indication field corresponding to the same set of (maxRank, maxRank'), determine the bit number corresponding to this DCI indication field according to the larger bit number of the indication field between STRP and SDM/SFN.

Alt. 2: Keep the indication field bit number unchanged, and finally perform zero padding according to the alignment of the overall DCI size.

Case 2: For the case where the PTRS-DMRS association indication field does not exist in either STRP or SDM/SFN.

Alt. 1: Keep the DCI indication field bit number unchanged, and finally perform zero padding according to the alignment of the overall DCI size. For example, for the case of maxRank'=1, STxMP transmission may correspond to 0 bits, while for STRP transmission with maxRank=2, the corresponding indication field bit number may be 1 (FC) or 2 (PC).

The above applies to DCI format 0_1 and DCI format 0_2 respectively.

The embodiments of the present disclosure also propose an apparatus for implementing any of the above methods. For example, an apparatus is provided, the apparatus includes units or modules for implementing the steps performed by the terminal in any of the above methods. As another example, another apparatus is provided, including units or modules for implementing the steps performed by the network device (e.g., access network device, core network function node, core network device, etc.) in any of the above methods.

It should be understood that the division of units or modules in the above apparatus is only a division of logical functions. In actual implementation, they may be fully or partially integrated into one physical entity, or may be physically separated. In addition, the units or modules in the apparatus may be implemented in the form of software invoked by a processor: for example, the apparatus includes a processor, the processor is connected to a memory, instructions are stored in the memory, and the processor invokes the instructions stored in the memory to implement any of the above methods or to implement the functions of the units or modules of the above apparatus, where the processor is, for example, a general-purpose processor such as a central processing unit (CPU) or a microprocessor, and the memory is a memory inside the apparatus or a memory outside the apparatus. Alternatively, the units or modules in the apparatus may be implemented in the form of hardware circuits, and the functions of some or all units or modules may be implemented by designing the hardware circuits. The hardware circuit may be understood as one or more processors; for example, in one implementation, the hardware circuit is an application-specific integrated circuit (ASIC), and by designing the logical relationship of the circuit elements, the functions of some or all of the above units or modules are implemented; as another example, in another implementation, the hardware circuit may be implemented by a programmable logic device (PLD). Taking a field programmable gate array (FPGA) as an example, it may include a large number of logic gate circuits, and the connection relationships between the logic gate circuits are configured through configuration files to implement the functions of some or all of the above units or modules. All units or modules of the above apparatus may be implemented entirely in the form of software invoked by a processor, or entirely in the form of hardware circuits, or partly in the form of software invoked by a processor and partly in the form of hardware circuits.

In the embodiments of the present disclosure, a processor is a circuit with signal processing capability. In one implementation, the processor may be a circuit with instruction reading and running capability, such as a central processing unit (CPU), a microprocessor, a graphics processing unit (GPU) (which can be understood as a microprocessor), or a digital signal processor (DSP), etc. In another implementation, the processor may implement certain functions through the logical relationships of hardware circuits. The logical relationships of the hardware circuits are fixed or reconfigurable. For example, the processor is a hardware circuit implemented by an application-specific integrated circuit (ASIC) or a programmable logic device (PLD), such as an FPGA. In reconfigurable hardware circuits, the process of the processor loading configuration files to implement hardware circuit configuration can be understood as the process of the processor loading instructions to implement the functions of some or all of the above units or modules. In addition, it may also be a hardware circuit designed for artificial intelligence, which can be understood as an ASIC, such as a neural network processing unit (NPU), a tensor processing unit (TPU), a deep learning processing unit (DPU), etc.

FIG. 6A is a structural diagram of a first communication apparatus according to an embodiment of the present disclosure. As shown in FIG. 6A, the first communication apparatus includes: a processing module, configured to determine a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports; the processing module is further configured to: in a case where the first width is different from the second width, perform a first operation to determine the first signaling to be sent in the first transmission scheme and/or the first signaling to be sent in the second transmission scheme, where the first operation is used to make a bit width of the first signaling to be sent in the first transmission scheme the same as a bit width of the first signaling to be sent in the second transmission scheme. Optionally, the processing module is configured to perform steps related to "processing" performed by the first device 101 in any of the above methods; optionally, the first communication apparatus further includes at least one of a receiving module and a sending module, where the receiving module is configured to perform steps related to receiving performed by the first device 101 in any of the above methods, and the sending module is configured to perform steps related to "sending" performed by the first device 101 in any of the above methods, which will not be repeated here.

FIG. 6B is a structural diagram of a second communication apparatus according to an embodiment of the present disclosure. As shown in FIG. 6B, the second communication apparatus includes: a processing module, configured to determine a first width and a second width, where the first width is a bit width required for a first indication field of a first signaling in a first transmission scheme, and the second width is a bit width required for the first indication field of the first signaling in a second transmission scheme, where the first indication field is used to indicate an association relationship between different ports; the processing module is further configured to: in a case where the first width is different from the second width, determine, based on the first width and the second width, a seventh width of the first signaling sent by a first device in the first transmission scheme and the second transmission scheme. Optionally, the second communication apparatus further includes at least one of a receiving module and a sending module, where the receiving module is configured to perform steps related to receiving performed by the second device 102 in any of the above methods, and the sending module is configured to perform steps related to sending performed by the second device 102 in any of the above methods, which will not be repeated here.

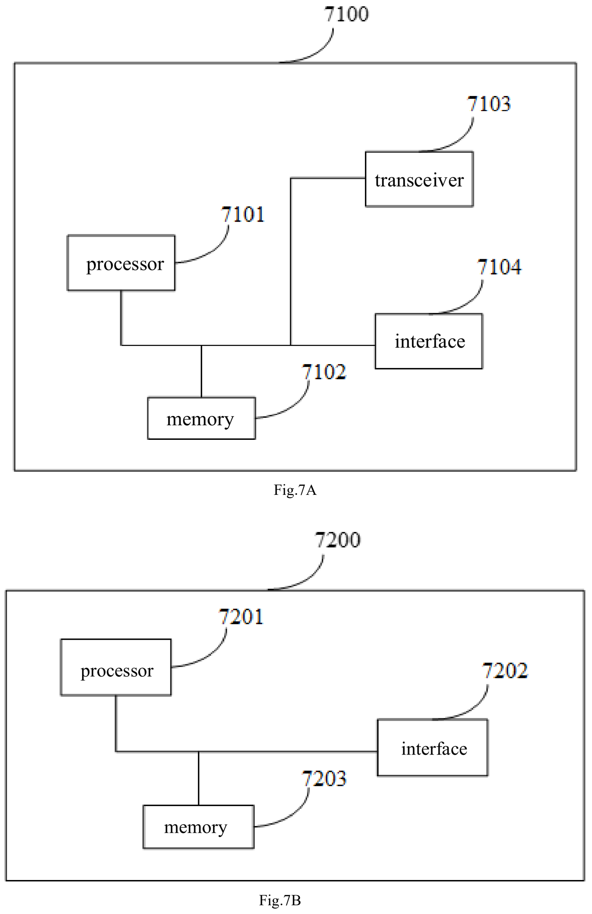

FIG. 7A is a structural diagram of a communication device 7100 according to an embodiment of the present disclosure. The communication device 7100 may be a network device (e.g., an access network device, a core network device, etc.), a terminal (e.g., a user equipment, etc.), a chip, a chip system, or a processor that supports a network device to implement any of the above methods, or a chip, a chip system, or a processor that supports a terminal to implement any of the above methods. The communication device 7100 may be used to implement the method described in the above method embodiments, and specific reference may be made to the description in the above method embodiments.

As shown in FIG. 7A, the communication device 7100 includes one or more processors 7101. The processor 7101 may be a general-purpose processor or a special-purpose processor, etc., such as a baseband processor or a central processor. The baseband processor may be used to process communication protocols and communication data, and the central processor may be used to control the communication device (e.g., a base station, a baseband chip, a terminal device, a terminal device chip, a DU or a CU, etc.), execute programs, and process program data. The processor 7101 is configured to invoke instructions to cause the communication device 7100 to perform any of the above methods.

In some embodiments, the communication device 7100 further includes one or more memories 7102 for storing instructions. Optionally, all or part of the memories 7102 may also be outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and other steps are performed by the processor 7101.

In some embodiments, the transceiver may include a receiver and a transmitter, which may be separate or integrated. Optionally, terms such as transceiver, transceiver unit, transceiver, transceiver circuit, etc., may be used interchangeably; terms such as transmitter, transmitter unit, transmitter, transmitter circuit, etc., may be used interchangeably; terms such as receiver, receiver unit, receiver, receiver circuit, etc., may be used interchangeably.

Optionally, the communication device 7100 further includes one or more interface circuits 7104. The interface circuits 7104 are connected to the memories 7102. The interface circuits 7104 may be used to receive signals from the memories 7102 or other devices, and may be used to send signals to the memories 7102 or other devices. For example, the interface circuits 7104 may read instructions stored in the memories 7102 and send the instructions to the processor 7101.

The communication device 7100 in the above embodiment description may be a network device or a terminal, but the scope of the communication device 7100 described in the present disclosure is not limited thereto. The structure of the communication device 7100 is not limited by FIG. 7A. The communication device may be an independent device or part of a larger device. For example, the communication device may be: 1) an independent integrated circuit (IC), chip, chip system, or subsystem; 2) a set of one or more ICs, optionally, the IC set may also include storage components for storing data and programs; 3) an ASIC, such as a modem; 4) a module that can be embedded in other devices; 5) a receiver, terminal device, smart terminal device, cellular phone, wireless device, handset, mobile unit, vehicle-mounted device, network device, cloud device, artificial intelligence device, etc.; 6) others, etc.

FIG. 7B is a structural diagram of a chip 7200 according to an embodiment of the present disclosure. For the case where the communication device 7100 may be a chip or chip system, refer to the structural diagram of the chip 7200 shown in FIG. 7B, but not limited thereto.

The chip 7200 includes one or more processors 7201. The processor 7201 is configured to invoke instructions to cause the chip 7200 to perform any of the above methods.

In some embodiments, the chip 7200 further includes one or more interface circuits 7202. The interface circuits 7202 are connected to a memory 7203. The interface circuits 7202 may be used to receive signals from the memory 7203 or other devices, and may be used to send signals to the memory 7203 or other devices. For example, the interface circuits 7202 may read instructions stored in the memory 7203 and send the instructions to the processor 7201. Optionally, terms such as interface circuit, interface, transceiver pin, transceiver, etc., may be used interchangeably.

In some embodiments, the chip 7200 further includes one or more memories 7203 for storing instructions. Optionally, all or part of the memories 7203 may be outside the chip 7200.

The present disclosure also provides a storage medium. The storage medium stores instructions. When the instructions are run on the communication device 7100, the communication device 7100 is caused to perform any of the above methods. Optionally, the storage medium is an electronic storage medium. Optionally, the storage medium is a computer-readable storage medium, but not limited thereto, and it may also be a storage medium readable by other devices. Optionally, the storage medium may be a non-transitory storage medium, but not limited thereto, and it may also be a transitory storage medium.

The present disclosure also proposes a program product. When the program product is executed by the communication device 7100, the communication device 7100 is caused to perform any of the above methods. Optionally, the program product is a computer program product.

The present disclosure also proposes a computer program. When it is run on a computer, the computer is caused to perform any of the above methods.

In the above embodiments, the implementation may be wholly or partly realized by software, hardware, firmware, or any combination thereof. When implemented using software, it may be wholly or partly implemented in the form of a computer program product. The computer program product includes one or more computer programs. When the computer program is loaded and executed on a computer, the processes or functions according to the embodiments of the present disclosure are wholly or partly generated. The computer may be a general-purpose computer, a special-purpose computer, a computer network, or other programmable devices. The computer program may be stored in a computer-readable storage medium or transmitted from one computer-readable storage medium to another computer-readable storage medium. For example, the computer program may be transmitted from a website site, computer, server, or data center to another website site, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server or data center integrated with one or more available media. The available medium may be a magnetic medium (e.g., floppy disk, hard disk, magnetic tape), an optical medium (e.g., digital video disc (DVD)), or a semiconductor medium (e.g., solid-state disk (SSD)), etc.

Those skilled in the art can realize that, with reference to the units and algorithm steps of the examples described in the embodiments disclosed herein, they can be implemented in electronic hardware, or a combination of computer software and electronic hardware. Whether these functions are performed by hardware or software depends on the specific application and design constraints of the technical solution. Professional technicians can use different methods for each specific application to implement the described functions, but such implementation should not be considered beyond the scope of the present disclosure.

Those skilled in the art can clearly understand that, for the convenience and brevity of description, the specific working processes of the systems, apparatuses, and units described above can refer to the corresponding processes in the foregoing method embodiments, and will not be repeated here.

The above descriptions are only specific embodiments of the present disclosure, but the scope of protection of the present disclosure is not limited thereto. Any person skilled in the art can easily think of changes or substitutions within the technical scope disclosed in the present disclosure, which should be covered by the scope of protection of the present disclosure. Therefore, the scope of protection of the present disclosure shall be subject to the scope of protection of the claims.

## Claims

1. A processing method, comprising:
determining, by a first device, a first width and a second width, wherein the first width is a bit width required for a first indication field of a first signaling in a first transmission scheme, the second width is a bit width required for the first indication field of the first signaling in a second transmission scheme, and the first indication field is used to indicate an association relationship between different ports; and
the first width being different from the second width, performing, by the first device, a first operation to determine the first signaling to be sent in the first transmission scheme and/or the first signaling to be sent in the second transmission scheme, wherein the first operation is used to make a bit width of the first signaling to be sent in the first transmission scheme to be the same with a bit width of the first signaling to be sent in the second transmission scheme.

2. The method according to claim 1, wherein the first signaling comprises a downlink control information (DCI) signaling;
the first indication field is used to indicate an association relationship between a demodulation reference signal (DMRS) port and a phase tracking reference signal (PTRS) port;
the first transmission scheme comprises: a single transmission reception point (STRP) transmission in a simultaneous transmission across multiple panels (STxMP) transmission; and
the second transmission scheme comprises: a space division multiplexing (SDM) transmission or a single frequency network (SFN) transmission of a multi transmission reception point (MTRP) in a STxMP transmission.

3. The method according to claim 1 or 2, wherein before performing the first operation, the method further comprises:
determining to perform an initial access;
determining to perform a cell reselection;
determining to perform a cell handover; or
determining to perform a bandwidth part (BWP) switching.

4. The method according to any one of claims 1 to 3, wherein performing the first operation comprises:
determining a first target value, wherein the first target value is a maximum of the first width and the second width, or the first target value is a value greater than the first width or the second width; and
performing a zero-padding operation on the first indication field to make both a third width and a fourth width to be the first target value, wherein the third width is a bit width of the first indication field subjected to the zero-padding operation of the first signaling to be sent in the first transmission scheme, and the fourth width is a bit width of the first indication field subjected to the zero-padding operation of the first signaling to be sent in the second transmission scheme.

5. The method according to any one of claims 1 to 4, wherein performing the first operation comprises:
determining a fifth width and a sixth width, wherein the fifth width is a bit width of the first signaling in a case where the first indication field has the first width, and the sixth width is a bit width of the first signaling in a case where the first indication field has the second width;
determining a second target value, wherein the second target value is a maximum of the fifth width and the sixth width, or the second target value is a value greater than the fifth width or the sixth width; and
performing a zero-padding operation on the first signaling to make both a seventh width and an eighth width to be the second target value, wherein the seventh width is a bit width of the first signaling subjected to the zero-padding operation and to be sent in the first transmission scheme, and the eighth width is a bit width of the first signaling subjected to the zero-padding operation and to be sent in the second transmission scheme.

6. The method according to any one of claims 1 to 5, wherein determining the first width comprises: determining the first width based on a first parameter, wherein the first parameter is used to configure a transmission manner of signal in the first transmission scheme; and
determining the second width comprises: determining the second width based on a second parameter, wherein the second parameter is used to configure a transmission manner of signal in the second transmission scheme.

7. The method according to claim 6, wherein the first parameter comprises at least one of: a maximum layer number corresponding to the first transmission scheme, a codebook subset corresponding to the first transmission scheme, a transmit precoding matrix indicator (TPMI) corresponding to the first transmission scheme, a transmit rank indicator (TRI) corresponding to the first transmission scheme or a maximum port number of PTRS corresponding to the first transmission scheme; and
the second parameter comprises at least one of: a maximum layer number corresponding to the second transmission scheme, a codebook subset corresponding to the second transmission scheme, a TPMI corresponding to the second transmission scheme, a TRI corresponding to the second transmission scheme or a maximum port number of PTRS corresponding to the second transmission scheme.

8. The method according to any one of claims 1 to 7, wherein after performing the first operation, the method further comprises:
sending the first signaling in the first transmission scheme, and/or sending the first signaling in the second transmission scheme.

9. The method according to any one of claims 2 to 8, wherein the DCI signaling comprises at least one of:
DCI format 0_1; or
DCI format 0_2.

10. A processing method, comprising:
determining, by a second device, a first width and a second width, wherein the first width is a bit width required for a first indication field of a first signaling in a first transmission scheme, the second width is a bit width required for the first indication field of the first signaling in a second transmission scheme, and the first indication field is used to indicate an association relationship between different ports; and
the first width being different from the second width, determining by the second device, based on the first width and the second width, a seventh width of the first signaling sent by a first device in the first transmission scheme and the second transmission scheme.

11. The method according to claim 10, wherein the first signaling comprises a downlink control information (DCI) signaling;
the first indication field is used to indicate an association relationship between a demodulation reference signal (DMRS) port and a phase tracking reference signal (PTRS) port;
the first transmission scheme comprises: a single transmission reception point (STRP) transmission in a simultaneous transmission across multiple panels (STxMP) transmission; and
the second transmission scheme comprises: a space division multiplexing (SDM) transmission or a single frequency network (SFN) transmission of a multi transmission reception point (MTRP) in a STxMP transmission.

12. The method according to claim 10 or 11, wherein determining by the second device, based on the first width and the second width, the seventh width of the first signaling sent by the first device in the first transmission scheme and the second transmission scheme comprises:
determining a first target value, wherein the first target value is a maximum of the first width and the second width, or the first target value is a value greater than the first width or the second width; and
determining a sum of the first target value and a bit width of any indication field other than the first indication filed in the first signaling as the seventh width.

13. The method according to claim 10 or 11, wherein determining by the second device, based on the first width and the second width, the seventh width of the first signaling sent by the first device in the first transmission scheme and the second transmission scheme comprises:
determining a fifth width and a sixth width, wherein the fifth width is a bit width of the first signaling in a case where the first indication field has the first width, and the sixth width is a bit width of the first signaling in a case where the first indication field has the second width;
determining a second target value, wherein the second target value is a maximum of the fifth width and the sixth width, or the second target value is a value greater than the fifth width or the sixth width; and
determining the second target value as the seventh width.

14. The method according to any one of claims 10 to 13, wherein determining the first width comprises: determining the first width based on a first parameter, wherein the first parameter is used to configure a transmission manner of signal in the first transmission scheme; and
determining the second width comprises: determining the second width based on a second parameter, wherein the second parameter is used to configure a transmission manner of signal in the second transmission scheme.

15. The method according to claim 14, wherein the first parameter comprises at least one of: a maximum layer number corresponding to the first transmission scheme, a codebook subset corresponding to the first transmission scheme, a transmit precoding matrix indicator (TPMI) corresponding to the first transmission scheme, a transmit rank indicator (TRI) corresponding to the first transmission scheme or a maximum port number of PTRS corresponding to the first transmission scheme; and
the second parameter comprises at least one of: a maximum layer number corresponding to the second transmission scheme, a codebook subset corresponding to the second transmission scheme, a TPMI corresponding to the second transmission scheme, a TRI corresponding to the second transmission scheme or a maximum port number of PTRS corresponding to the second transmission scheme.

16. The method according to any one of claims 10 to 15, further comprising
demodulating the first signaling received in the first transmission scheme and/or demodulating the first signaling received in the second transmission scheme, based on the seventh width.

17. The method according to any one of claims 12 to 16, wherein the DCI signaling comprises at least one of:
DCI format 0_1; or
DCI format 0_2.

18. A processing method, performed by a communication system, wherein the communication system comprising a first device and a second device, and the method comprises at least one of:
determining, by a first device, a first width and a second width, wherein the first width is a bit width required for a first indication field of a first signaling in a first transmission scheme, the second width is a bit width required for the first indication field of the first signaling in a second transmission scheme, and the first indication field is used to indicate an association relationship between different ports; and
the first width being different from the second width, performing, by the first device, a first operation to determine the first signaling to be sent in the first transmission scheme and/or the first signaling to be sent in the second transmission scheme, wherein the first operation is used to make a bit width of the first signaling to be sent in the first transmission scheme to be the same with a bit width of the first signaling to be sent in the second transmission scheme;
determining a seventh width by the second device, wherein the seventh width is a bit width of the first signaling sent by the first device in the first transmission scheme and the second transmission scheme, and the seventh width is determined based on the first width and the second width; and
demodulating the first signaling received in the first transmission scheme and/or demodulating the first signaling received in the second transmission scheme, based on the seventh width.

19. A first communication apparatus, comprising a processing module configured to:
determine a first width and a second width, wherein the first width is a bit width required for a first indication field of a first signaling in a first transmission scheme, the second width is a bit width required for the first indication field of the first signaling in a second transmission scheme, and the first indication field is used to indicate an association relationship between different ports; and
the first width being different from the second width, perform a first operation to determine the first signaling to be sent in the first transmission scheme and/or the first signaling to be sent in the second transmission scheme, wherein the first operation is used to make a bit width of the first signaling sent in the first transmission scheme to be the same with a bit width of the first signaling sent in the second transmission scheme.

20. A second communication apparatus, comprising a processing module configured to:
determine a first width and a second width, wherein the first width is a bit width required for a first indication field of a first signaling in a first transmission scheme, the second width is a bit width required for the first indication field of the first signaling in a second transmission scheme, and the first indication field is used to indicate an association relationship between different ports; and
the first width being different from the second width, determine, based on the first width and the second width, a seventh width of the first signaling sent by a first device in the first transmission scheme and the second transmission scheme.

21. A communication device, comprising one or more processors;
wherein the one or more processors are configured to invoke instructions to cause the communication device to perform the processing method according to any one of claims 1 to 9 and 10 to 17.

22. A communication system, comprising a terminal and a network device, wherein
the terminal is configured to implement the processing method according to any one of claims 1 to 9; and
the network device is configured to implement the processing method according to any one of claims 10 to 17.

23. A storage medium, having stored therein instructions that, when running on a communication device, cause the communication device to perform the processing method according to any one of claims 1 to 9 and 10 to 17.
